# EUROPEAN PATENT APPLICATION

(11) **EP 3 786 462 A1**
(43) Date of publication of application: **03.03.2021**
(21) Application number: 19194997.3
(22) Date of filing: 02.09.2019
(51) Int. Cl.: F15B 15/16, F15B 15/14

(54) **A TELESCOPIC CYLINDER**

(71) Applicant: Hyva Holding BV, 2408 AK Alphen aan den Rijn (NL)
(72) Inventor: BRISTOT, Leandro Fabris, 2408 AK Alphen aan den Rijn (NL)
(74) Representative: Haseltine Lake Kempner LLP

(57) **Abstract**

There is disclosed a telescopic cylinder 14 comprising an outer tube 16b and an inner tube 16a disposed at least partly within the outer tube 16b and being longitudinally displaceable within the outer tube 16b along a stroke between a start of the stroke in which the inner tube 16a is fully retracted within the outer tube 16b and an end of the stroke in which the inner tube 16a is fully extended out of the outer tube 16b. The telescopic cylinder 14 comprises a guide ring 24 disposed in a recess in an inner surface 20 of the outer tube 16b and configured to contact the outer surface 22 of the inner tube 16a to align the inner tube 16a within the outer tube 16b throughout the stroke. The telescopic cylinder 14 also comprises a slider 28 disposed in a recess in the outer surface 22 of the inner tube 16a, and a wearband 30 disposed in a recess in the inner surface 20 of the outer tube 16b, wherein the slider 28 and wearband 30 are configured to come into contact with one another when the inner tube 16a is at the end of the stroke, to align the inner tube 16a within the outer tube 16b at the end of stroke.

## Description

The present invention relates to a telescopic cylinder, and a tipper truck comprising the telescopic cylinder.

Telescopic cylinders typically comprise a plurality of tubes having progressively smaller diameters, which are nested within one another, and are extendable and retractable. It is important to the efficient functioning of a telescopic cylinder that each tube remains aligned with other tubes, during extension or retraction.

According to a first aspect, there is provided a telescopic cylinder comprising: an outer tube; an inner tube disposed at least partly within the outer tube and being longitudinally displaceable within the outer tube along a stroke between a start of the stroke in which the inner tube is fully retracted within the outer tube and an end of the stroke in which the inner tube is fully extended out of the outer tube; a guide ring disposed in a recess in an inner surface of the outer tube and configured to contact the outer surface of the inner tube to align the inner tube within the outer tube throughout the stroke; and a slider disposed in a recess in the outer surface of the inner tube, and a wearband disposed in a recess in the inner surface of the outer tube, wherein the slider and wearband are configured to come into contact with one another when the inner tube is at the end of the stroke, to align the inner tube within the outer tube at the end of stroke.

The wearband may comprise a fibre reinforced composite material. The wearband may be pre-stressed such that it is biased to secure it in the recess in the inner surface of the outer tube.

The slider may comprise a chamfer. The wearband may comprise a chamfer.

According to a second aspect, there is provided a tipper truck comprising a tipper body actuatable to pivot about a pivot axis by extension or retraction of a telescopic cylinder according to the first aspect.

Embodiments of the invention will now be described, by way of example only, with reference to the accompanying figures, in which:
Figure 1 schematically shows a perspective view of a tipper truck; and
Figure 2 schematically shows a cross-sectional view of adjacent stages of a telescopic cylinder.

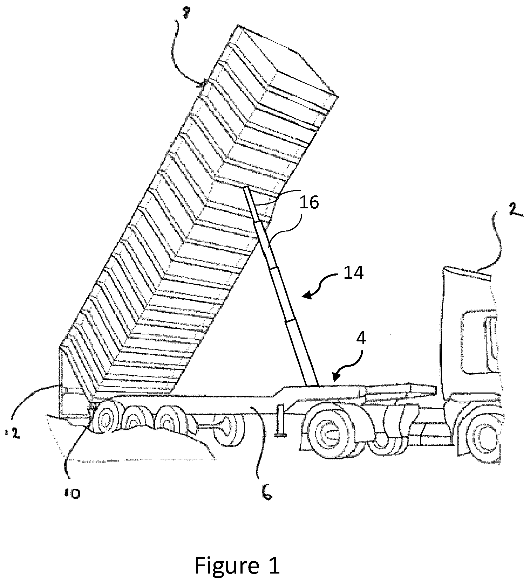

**Figures 1** shows a tipper truck 1, sometimes referred to as a dump truck, comprising a tractor 2 and a trailer 4. The trailer 4 has a trailer chassis or frame 6, and a tipper body 8 is pivotably mounted thereto. The tipper body 8 is pivotably mounted to the chassis 6 about a transverse axis 10 that is located at the rear of the chassis 6, i.e. a rear tipper. In other examples, the tipper body may be pivotably mounted about a longitudinal axis that is located along the side of the chassis, i.e. a side tipper. The tipper body 8 is in the form of a cuboidal container having an open top. The rear panel (or door) 12 of the tipper body 8 is hinged at its upper edge and can be locked and unlocked such that it can be opened to allow the contents of the tipper body 8 to be emptied. A telescopic hydraulic cylinder 14 is provided that is pivotably attached at a lower end to the middle of the chassis 6 and pivotably attached an upper end to the bottom of the tipper body 8. In other examples, the upper end of the cylinder may be attached to other parts of the tipper body, such as the front or side, and the lower end of the cylinder may be attached to other parts of the chassis, such as towards the front, or towards the back.

The telescopic cylinder 14 comprises a plurality of tube stages 16 extending longitudinally between the front of the chassis 6 and the front of the tipper body 8. In this example, there are four tube stages 16, which have progressively smaller diameters from the front of the chassis 6 to the front of the tipper body 8. The tube stages 16 are therefore configured to be nested within one another when in a fully retracted position. The telescopic cylinder 14 can be extended (as in Figure 1) to pivot the tipper body 8 about the axis 10 to a fully tipped position in which, with the rear panel 12 unlocked, any load within the tipper body 8 is emptied onto the ground. The telescopic cylinder 14 can also be retracted to the fully retracted position so as to pivot the tipper body 8 back to a resting position in which it rests on the chassis 6.

In a typical telescopic cylinder, the transition from each tube stage to the next adjacent tube stage comprises an inner tube (with a smaller diameter) and an outer tube (with a larger diameter).

In order for a typical telescopic cylinder to be able to move accurately and reliably in extension or retraction, the radial clearance between the inner tube and the outer tube should be made as small as possible, particularly at maximum extension. In previously considered arrangements, this was done by machining an inner surface of the outer tube to a high dimensional tolerance. However, this is a complex and expensive process. Further, the outer tube must then be manufactured with thicker walls in order to be able to machine away the inner surface.

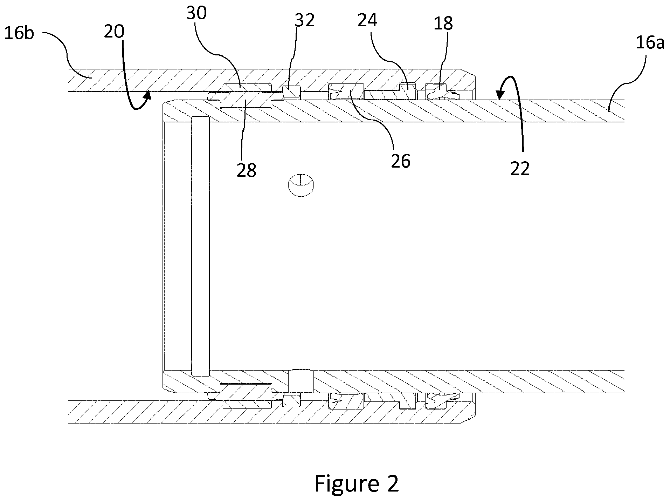

**Figure 2** shows a cross-sectional view of a portion of the hydraulic cylinder 14 of the invention comprising two adjacent tube stages 16, one tube stage 16 with a smaller diameter than the other tube stage 16. The tube stage 16 with the smaller diameter will be referred to herein as an inner tube 16a, and the tube with the larger diameter will be referred to herein as an outer tube 16b.

In this example, the inner tube 16a and the outer tube 16b are made from steel. In other examples, the inner tube and outer tube may be made from any suitable material. The inner tube 16a is disposed at least partly within the outer tube 16b and is concentric with the outer tube 16b.

The inner tube 16a is displaceable in a longitudinal direction (i.e. parallel to a longitudinal direction of the inner tube 16a and the outer tube 16b) within the outer tube 16b. The inner tube 16a is moveable along a stroke between a start of the stroke in which the inner tube 16a is fully retracted within the outer tube 16b and an end of the stroke in which the inner tube 16a is fully extended out of the outer tube 16b. Figure 2 shows the inner tube 16a at the end of the stroke.

The outer tube 16b comprises a wiper 18 at an end of the tube from which the inner tube 16a extends. The wiper 18 is annular and is disposed in a recess in an inner surface 20 of the outer tube. The wiper 18 is configured to contact an outer surface 22 of the inner tube 16a, in order to wipe the outer surface 22 of the inner tube 16a when the inner tube 16a moves along the stroke. This ensures that dirt is removed from the inner tube 16a before it retracts into the outer tube 16b.

The outer tube 16b comprises a guide ring 24 adjacent to the wiper 18, within the outer tube 16b. The guide ring 24 is annular and is disposed in a recess in the inner surface 20 of the outer tube 16b. The guide ring 24 is configured to contact the outer surface 22 of the inner tube 16a throughout the stroke of the inner tube 16a. The guide ring 24 is configured to guide the inner tube 16a within the outer tube 16b to ensure proper alignment of the inner tube 16a within the outer tube 16b along the stroke.

The outer tube 16b further comprises an annular seal 26 which is disposed in a recess in the inner surface 20 of the outer tube 16b adjacent the guide ring 24. The seal 26 is configured to fluidically seal an internal cavity of the tube s 16 from the external environment, such that pressurised hydraulic fluid within the telescopic cylinder 14 cannot escape from the telescopic cylinder 14.

The inner tube 16a comprises an annular slider 28 which is disposed in a recess in the outer surface 22 of the inner tube 16a, in an end of the inner tube 16a which is received within the outer tube 16b.

The outer tube 16b further comprises a stop ring 32 which is disposed within a recess in the inner surface 20 of the outer tube 16b adjacent to the seal 26. The stop ring 32 is annular and is configured to act as a stop for the slider 28, to prevent further extension of the inner tube 16a from the outer tube 16b. Contact of the slider 28 with the stop ring 32 therefore indicates the end of the stroke. In other examples, the stop ring may be configured to act as a stop for another stop component on the inner tube, such that the inner tube may alternatively be at the end of the stroke when the stop component comes into contact with the stop ring.

The outer tube 16b further comprises an annular wearband 30 which is disposed in a recess in the inner surface 20 of the outer tube 16b. The wearband 30 is located such that it opposes the slider 28 when the inner tube 16a is at the end of the stroke (i.e. when the slider 28 is in contact with the stop ring 32, or very close to coming into contact with the stop ring 32). The wearband 30 and slider 28 are configured to come into contact with one another when the inner tube 16a is at or immediately proximate the end of the stroke, in order to align the inner tube 16a within the outer tube 16b at or very near the end of the stroke. Aligning the inner tube 16a within the outer tube 16b involves minimising the deflection of a longitudinal axis of the inner tube 16a from a longitudinal axis of the outer tube 16b. Ideally, the longitudinal axis of the inner tube 16a is parallel with the longitudinal axis of the outer tube 16b.

As explained above, previously considered systems required the whole inner surface of the outer tube to be machined in order for a slider to be able to accurately align the inner tube at the end of the stroke, and for the slider to be able to move unimpeded within the outer tube along the rest of the stroke.

However, having a wearband 30 and cooperating slider 28 as described above enables the outer tube s 16b to be manufactured more cost effectively. In particular, no or reduced machining of the inner surface 20 of the outer tube 16b may be required. The recess for receiving the wearband 30 can be accurately machined, and as such, a wearband 30 with a known thickness of high precision can oppose the slider 28 at the end of the stroke with a very small radial clearance between them, thus minimising the deflection of the inner tube 16a longitudinal axis from the outer tube 16b longitudinal axis.

Having a cooperating wearband 30 and slider 28 as described above also permits manufacture of the outer tube 16b with thinner walls. Thinner walls ensures that the slider 28 will not be impeded by the outer tube 16b along the stroke, without the need for machining of the inner surface 20 of the outer tube 16b. Although this will result in a larger radial clearance between the slider 28 and the inner surface 20 of the outer tube 16b, this will not affect the alignment of the inner tube 16a within the outer tube 16b at the end of the stroke, because the slider 28 is in contact with the wearband 30.

The applicant has found that in a telescopic cylinder having 8 tube stages 16 with inner surfaces 20 which have not been machined, the deflection of the tube stages 16 is reduced by approximately 26% for a fully extended telescopic cylinder 14 with a wearband 30 compared with a similar telescopic cylinder without a wearband.

The application has further found that a smaller telescopic cylinder 14 with only 2 tube stages 16, also results in a reduced deflection of approximately 8% for a telescopic cylinder 14 with a wearband 30 compared to one without a wearband. The difference in improvement between the 2- tube stage and 8- tube stage telescopic cylinders can be explained by there being fewer tube stages (i.e. the reduction in deflection of the last tube stage 16 will be higher for a telescopic tube with more tube stages 16, as there is an additional deflection between each pair of tube stages).

The wearband 30 in this example comprises a woven fabric fibre reinforced polyester resin. In other examples, the wearband may comprise any suitable material, such as a glass fibre composite, a carbon fibre composite, brass or any suitable plastic. In this example, the wearband 30 and the slider 28 comprise chamfered edges so as to smooth the movement of the slider 28 over the wearband 30. In other examples, only the slider may comprise a chamfer, or only the wearband may comprise a chamfer in order to smooth movement of the slider over the wearband. In further examples, the wearband and the slider may both not comprise a chamfer.

In this example, the wearband 30 is pre-stressed, such that it is biased to force the wearband 30 radially outward into the recess in the outer tube 16b. Therefore, the pre-stressed wearband 30 is configured to secure itself in the recess. In other examples, the wearband may be adhered into the recess with a suitable adhesive or by another suitable fixing process.

Having a pre-stressed wearband 30 as described, enables the wearband 30 to secure itself within the recess in the outer tube 16b as described above, such that no adhesive is required. This means that the radial clearance between the wearband 30 and the slider 28 can be much more accurately predicted, as a layer of adhesive will not have to be taken into consideration. As such, the radial clearance between the slider 28 and the wearband 30 can be minimised.

It will be appreciated that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A telescopic cylinder comprising:
an outer tube;
an inner tube disposed at least partly within the outer tube and being longitudinally displaceable within the outer tube along a stroke between a start of the stroke in which the inner tube is fully retracted within the outer tube and an end of the stroke in which the inner tube is fully extended out of the outer tube;
a guide ring disposed in a recess in an inner surface of the outer tube and configured to contact the outer surface of the inner tube to align the inner tube within the outer tube throughout the stroke; and
a slider disposed in a recess in the outer surface of the inner tube, and a wearband disposed in a recess in the inner surface of the outer tube, wherein the slider and wearband are configured to come into contact with one another when the inner tube is at the end of the stroke, to align the inner tube within the outer tube at the end of stroke.

2. A telescopic cylinder according to claim 1, wherein the wearband comprises a fibre reinforced composite material.

3. A telescopic cylinder according to claim 1 or 2, wherein the wearband is pre-stressed such that it is biased to secure it in the recess in the inner surface of the outer tube.

4. A telescopic cylinder according to any preceding claim, wherein the slider comprises a chamfer.

5. A telescopic cylinder according to any preceding claim, wherein the wearband comprises a chamfer.

6. A tipper truck comprising a tipper body actuatable to pivot about a pivot axis by extension or retraction of a telescopic cylinder according to any preceding claim.
